(19) **Europäisches Patentamt / European Patent Office / Office européen des brevets**

(11) **EP 4 636 841 A1**

(12) **EUROPEAN PATENT APPLICATION**
published in accordance with Art. 153(4) EPC

(43) Date of publication:
**22.10.2025 Bulletin 2025/43**

(21) Application number: **23903911.8**

(22) Date of filing: **11.12.2023**

(51) International Patent Classification (IPC):
*H01M 4/133* (2010.01)     *H01M 4/62* (2006.01)
*H01M 4/1393* (2010.01)    *H01M 10/052* (2010.01)
*H01M 4/02* (2006.01)

(52) Cooperative Patent Classification (CPC):
**H01M 4/02; H01M 4/133; H01M 4/1393;
H01M 4/62; H01M 10/052;** Y02E 60/10

(86) International application number:
**PCT/KR2023/020281**

(87) International publication number:
**WO 2024/128708 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022  KR 20220177564**

(71) Applicants:
• **POSCO Holdings Inc.**
  **Pohang-si, Gyeongsangbuk-do 37859 (KR)**
• **RESEARCH INSTITUTE OF INDUSTRIAL
  SCIENCE &
  TECHNOLOGY
  Pohang-si, Gyeongsangbuk-do 37673 (KR)**

(72) Inventors:
• **LEE, Gang-Ho
  Pohang-si, Gyeongsangbuk-do 37671 (KR)**
• **PARK, Sei-Min
  Pohang-si, Gyeongsangbuk-do 37655 (KR)**
• **KIM, Yong-Jung
  Pohang-si, Gyeongsangbuk-do 37673 (KR)**
• **KIM, Jang-Yul
  Pohang-si, Gyeongsangbuk-do 37673 (KR)**

(74) Representative: **Pfenning, Meinig & Partner mbB
Patent- und Rechtsanwälte
Theresienhöhe 11a
80339 München (DE)**

(54) **NEGATIVE ELECTRODE MATERIAL PRECURSOR FOR LITHIUM SECONDARY BATTERY,
NEGATIVE ELECTRODE MATERIAL, LITHIUM SECONDARY BATTERY, AND METHOD FOR
PREPARING NEGATIVE ELECTRODE MATERIAL**

(57)   The present invention relates to a negative electrode material for a lithium secondary battery, to a precursor for preparing the negative electrode material, to a lithium secondary battery comprising the negative electrode material, and to a method for preparing the negative electrode material for a lithium secondary battery. A negative electrode precursor, according to one aspect of the present invention, comprises: artificial graphite; and natural graphite, wherein the artificial graphite may have a D50 of 11-30 $\mu$m, the natural graphite may have a D50 of 6 $\mu$m or less, and a span expressed by following relational equation 1 may be 1.5 or less. [Relation 1] span = (D90-D10)/D50

[FIG. 1]

**Description**

Technical Field

The present disclosure relates to an anode material for a lithium secondary battery, a precursor for manufacturing the anode material, a lithium secondary battery including the anode material, and a method for manufacturing the anode material for a lithium secondary battery.

Background Art

Carbon is a material widely used as an anode active material for lithium secondary batteries. In particular, carbon is widely used in the form of graphite, and in batteries, charging and discharging is performed by intercalation-decalation reactions in which lithium ions are intercalated and deintercalated between graphite layers.

Graphite used as an anode material in secondary batteries may be divided into natural graphite obtained from nature and artificial graphite obtained through the process of graphitization, or the like. In the case of artificial graphite, it may have a more stable crystal structure than natural graphite, and thus, it has the advantage of a relatively long lifespan because the crystal structure changes little during the process of lithium ions being repeatedly intercalated and deintercalated.

Artificial graphite may be manufactured for secondary batteries from scratch, but may also be manufactured for use in other industries or obtained as a byproduct during such manufacturing processes. In particular, as demand for graphite in the secondary battery field increases and the economic feasibility of graphite is increasingly required, the need to reprocess graphite obtained through such other processes and use the same as artificial graphite for anode material is increasing.

Disclosure of Invention

Technical Problem

An aspect of the present disclosure is to provide a graphite-based anode precursor including artificial graphite suitable for use as an anode material of a secondary battery.

Another aspect of the present disclosure is to provide a graphite-based anode material including artificial graphite.

Another aspect of the present disclosure is to provide a lithium secondary battery using a graphite-based anode material including artificial graphite as an anode active material.

Still other aspects of the present disclosure are to provide preferable methods for manufacturing them.

The subject matter of the present disclosure is not limited to the above-described contents. Anyone having ordinary knowledge in the technical field to which the present disclosure belongs will have no difficulty in understanding additional subjects of the present disclosure from the overall contents of this specification.

Solution to Problem

According to an aspect of the present disclosure, an anode precursor for a secondary battery includes artificial graphite; and

natural graphite, wherein the artificial graphite has a D50 of 11 to 30 $\mu$m, and the natural graphite has a D50 of 6 $\mu$m or less and a span of 1.5 or less expressed by Relation 1 below.

[Relation 1]

$$span = (D90\text{-}D10)/D50.$$

According to another aspect of the present disclosure, an anode material for a secondary battery includes artificial graphite; and a precursor for an anode material including natural graphite, and a binder combined with the precursor for the anode material, wherein the artificial graphite has a D50 of 11 to 30 $\mu$m, the natural graphite has a D50 of 6 $\mu$m or less, and the span may be 1.5 or less.

According to another aspect of the present disclosure, a method for preparing an anode material for a secondary battery includes an operation of mixing the artificial graphite and the natural graphite and obtaining a mixture; an operation of coating a binder on the mixture; and an operation of heat-treating the mixture and the binder, wherein the artificial graphite has a D50 of 11 to 30 $\mu$m, the natural graphite has a D50 of 6 $\mu$m or less, and the span may be 1.5 or less.

According to another aspect of the present disclosure, a secondary battery includes an anode including a current collector and an anode material, the anode material including a precursor for the anode material coated on a surface of the current collector and including artificial graphite and natural graphite, and a binder combined with the precursor for the anode material; an electrolyte; and a cathode, wherein the artificial graphite has a D50 of 11 to 30 $\mu$m, the natural graphite has a D50 of 6 $\mu$m or less, and the span may be 1.5 or less.

Advantageous Effects of Invention

As described above, in the present disclosure, the problems of side reactions occurring when artificial graphite including many edges while being assembled is used as an anode material, and the problems of reduced adhesive strength and electrochemical performance of active materials, and the like, may be resolved.

Brief Description of Drawings

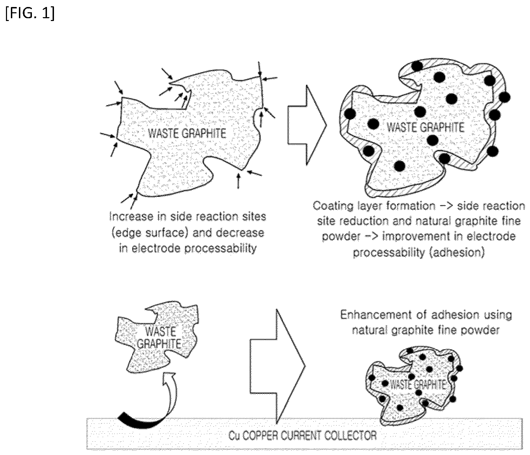

FIG. 1 is an illustrative diagram illustrating the problems that occur when artificial graphite is used as an anode material and the mechanism for supplementing the same with natural graphite.

Best Mode for the Invention

The embodiments of the present disclosure are not limited to the embodiments disclosed below. For example, those skilled in the art who understand the idea of the present disclosure will be able to easily suggest other embodiments included within the scope of the idea of the present disclosure through addition, modification, deletion of components, or the like, but this will also be considered to be included within the scope of the idea of the present disclosure.

In addition, throughout the specification, the term "including" a certain component does not exclude other components unless otherwise specifically stated, but rather means that other components may be included. In addition, the distinction between "above and below (top and bottom)," "forward and backward (front and back)," or "left and right (left and right)" in this specification does not mean an absolute physical positional relationship, and it should be noted that even if it is above, it may be implemented as a shape that exists below, unless it is contrary to a natural phenomenon or clearly impossible to implement.

In addition, it should be noted that, unless otherwise specified in the present disclosure, the mixing ratio or composition is based on weight.

In addition, each implementation example described below is only one example of implementing the technical idea of the present disclosure, and the scope of rights of the present disclosure is not limited to each implementation example.

Hereinafter, the present disclosure will be described in detail.

Although not necessarily limited thereto, when using artificial graphite as an anode material of a secondary battery by crushing waste electrode rods in bulk or graphite produced as a byproduct in the graphite manufacturing process, as illustrated in FIG. 1, the shape is very irregular and there are many edges, and thus the surface area in contact with the electrode is small. In particular, since these types of artificial graphite have a hydrophobic surface, there is a problem that the adhesion to the electrode is much worse than that of natural graphite. In addition to graphite, when these artificial graphites have a large number of edges, problems such as an increase in side reaction sites such as the formation of an SEI film may occur. Therefore, there were many difficulties in using crushed artificial graphite for electrode manufacturing, and it was common to manufacture anode materials mainly using natural graphite in the related art.

The inventors of the present disclosure have conducted in-depth research to solve the above-described problem of utilizing artificial graphite, and as a result, they have found that when artificial graphite and natural graphite are mixed and used under appropriate conditions, various problems of artificial graphite may be solved and it may be suitably used as an anode material of a secondary battery, which led to the present disclosure.

That is, the anode material precursor provided in an embodiment of the present disclosure may include a mixture of artificial graphite and natural graphite. In addition, in an embodiment of the present disclosure, the artificial graphite may be waste graphite or graphite obtained through recycling treatment, or graphite obtained as a byproduct in a graphite manufacturing process (for example, graphite generated from packing coke in a process of manufacturing graphite in an Acheson furnace). An example of waste graphite may include that obtained from a waste electrode rod, but is not necessarily limited thereto.

According to an embodiment of the present disclosure, the artificial graphite may have a particle size (D50) of 11 to 30 $\mu$m. Artificial graphite processed in bulk state is difficult to have relatively fine particle size, and thus may have various problems as described above. In particular, coarse artificial graphite having D50 of 11 $\mu$m or more may advantageously accept the solution provided by the present disclosure, and as a result, may be usefully used as an anode material.

However, if the particle size is too large, an anode material with excellent performance cannot be obtained despite various solutions described below, so the D50 of the artificial graphite may be limited to 30 $\mu$m or less. Therefore, in an embodiment of the present disclosure, the particle size of the artificial graphite may be limited to 11 to 30 $\mu$m, and in another embodiment, the particle size of the artificial graphite may be limited to 14 to 20 $\mu$m.

According to an embodiment of the present disclosure, the artificial graphite may have a specific surface area of 0.8 to 1.5 m$^2$/g. That is, when using the advantageous means of the present disclosure to solve the problem of artificial graphite having many edges, even if an amorphous artificial graphite having a specific surface area of 0.8 m$^2$/g or more is used as an anode material, it may have excellent performance as an anode material. When using the solution according to an embodiment of the present disclosure, there is no particular problem even if the specific surface area increases, so the upper limit of the specific surface area may not be specifically limited. However, considering the specific surface area distribution of the artificial graphite obtained in the pulverization process, the upper limit of the specific surface area of the artificial graphite may be set to 1.5 m$^2$/g. Any known method may be employed to measure the specific surface area of artificial graphite, and in an embodiment of the present disclosure, the Brunauer, Emmett and Teller (BET) method may be used.

Artificial graphite having the above-described conditions may not normally be suitable for use as an anode material. However, when combined with the solution of the present disclosure described below, it may exhibit excellent performance as an anode material.

That is, the precursor of the anode material of the present disclosure may be a mixture of the artificial graphite and the natural graphite having a relatively small particle size. As illustrated in FIG. 1, when using natural graphite having a small particle size, not only may edge portions be reduced by combining with the irregular shape of artificial graphite, but also the adhesive strength with the electrode may be improved by complementing the disadvantage of artificial graphite having a hydrophobic surface.

According to an embodiment of the present disclosure, the advantageous natural graphite described above may have a D50 of 6 $\mu$m or less. As described above, when it has a sufficiently small particle size, the irregular surface shape of the artificial graphite may be complemented well. Therefore, in an embodiment of the present disclosure, the D50 of the natural graphite may be 6 $\mu$m or less, and in another embodiment, may be 4 $\mu$m or less. There is no particular limitation on the lower limit of the D50 of the natural graphite, but in an embodiment of the present disclosure, the D50 of the natural graphite may be set to 1.0 $\mu$m or more, and in another embodiment, the D50 of the natural graphite may be set to 1.5 $\mu$m or more.

In addition, in an embodiment of the present disclosure, the span of the particle size of the natural graphite indicated by Relation 1 below may be 1.5 or less. This is because it may be more suitable for obtaining the advantageous effects of the present disclosure when it has a uniform particle size distribution close to D50. Therefore, in an embodiment of the present disclosure, the span may be 1.5 or less, and in another embodiment, the span may be 1.3 or less.

$$[\text{Relation 1}]$$

$$\text{span} = (D90\text{-}D10)/D50$$

As the natural graphite, flaky graphite or amorphous graphite may be used.

According to an embodiment of the present disclosure, the weight ratio of the natural graphite to the total weight of the artificial graphite and the natural graphite may be 10 to 30%. If the ratio of the natural graphite is too low, the advantageous effects due to the addition of the natural graphite may not be sufficient, and on the contrary, if the ratio of the natural graphite is too high, it may be difficult to expect any further increase in the effect. Therefore, in an embodiment of the present disclosure, the ratio of the natural graphite may be 30% or less, and in another embodiment, the ratio of the natural graphite may be limited to 20% or less.

The anode material provided in an embodiment of the present disclosure may further include a small amount of binder to bind the artificial graphite and the natural graphite in the anode material precursor described above. The binder may be included in a ratio of 4 to 12 wt% of the total anode material, and may be carbonized from one or two or more selected from coal-derived tar, petroleum-derived tar, pitch composition, and petroleum heavy oil, as a thermoplastic resin. The pitch usable in an embodiment of the present disclosure may be coal-derived coal tar pitch or petroleum-derived pitch.

One method for manufacturing the anode material precursor or the anode material described above is as follows. However, the manufacturing method below is only an illustrative method for manufacturing the precursor or anode material of the present disclosure, and does not necessarily mean that the precursor or anode material of the present disclosure should be manufactured by the manufacturing method below.

First, an operation of preparing artificial graphite and natural graphite may be performed. The characteristics of artificial graphite and natural graphite are as described above.

Thereafter, the prepared artificial graphite and natural graphite may be mixed to obtain a mixture of artificial graphite and natural graphite. For mixing, a device such as a planetary mixer, a sigma blade mixer, a Henschel mixer, a V-mixer, or the like may be used. An anode material precursor according to an embodiment of the present disclosure may be obtained by this process.

An operation of mixing the obtained precursor (mixture) with a binder may be followed. To mix the precursor and the binder, a method of applying shear force by high-speed rotation after putting each material may be used, and as a result, a material in which the binder is coated on the mixture of the artificial graphite and the natural graphite may be obtained. The binder may be included in a ratio of 10 to 20% of the total weight of the precursor and the binder. However, during the heat treatment process, the solvent, or the like, contained in the binder may be lost, so that the weight of the binder in the final anode material may decrease.

An operation of performing heat treatment on the mixture of the artificial graphite and the natural graphite coated with the binder is performed. The binder may be carbonized by the heat treatment to become a carbonaceous material. The binder may be one or two or more selected from coal-derived tar, petroleum-derived tar, a pitch composition, and petroleum heavy oil, as a thermoplastic resin.

The heat treatment may be performed at a temperature of about 1000 to 1400 for 30 to 120 minutes. If the temperature is low or the time is short, a sufficient carbonization effect cannot be obtained, and if the temperature is too high or the time is long, the device may be overloaded or it may not be economically advantageous.

An anode material including artificial graphite, natural graphite, and a binder (carbon-based material) may be obtained by the above-described process.

According to an embodiment of the present disclosure, a secondary battery including the above-described anode material may be provided. The secondary battery according to an embodiment of the present disclosure is provided as a lithium secondary cell, and may include an anode including the above-described anode material, a cathode, and an electrolyte. In an embodiment of the present disclosure, a separator between the cathode and the anode may be further included.

In an embodiment of the present disclosure, the anode may be manufactured by applying a slurry containing an anode material (anode active material) manufactured according to an embodiment of the present disclosure to a current collector and drying the same.

The slurry may be obtained by mixing the anode material, a binder, and a solvent.

The binder is not particularly limited as long as it is used in the secondary battery field, but may be one or two or more selected from among polyvinyl alcohol, carboxymethyl cellulose/styrene-butadiene rubber, hydroxypropylene cellulose, diacetylene cellulose, polyvinyl chloride, polyvinyl pyrrolidone, polytetrafluoroethylene, polyvinylidene fluoride, polyethylene, and polypropylene. The binder may be mixed in a ratio of 1 to 30 wt% with respect to the total amount of the slurry.

The electrolyte may be any one used in a lithium secondary battery and the type thereof is not limited.

The solvent may be distilled water, for example.

The slurry may further include a conductive agent as needed. The conductive agent is not particularly limited as long as it does not cause a chemical change in the battery and has conductivity, and in detail, graphite such as natural graphite, artificial graphite or the like; carbon black such as acetylene black, Ketjen black, channel black, furnace black, lamp black, thermal black, or the like; conductive fibers such as carbon fibers, metal fibers or the like; metal powder such as fluorocarbon, aluminum, nickel powder or the like; conductive whiskers such as zinc oxide, potassium titanate, or the like; conductive metal oxide such as titanium oxide or the like; a conductive material such as polyphenylene derivatives or the like may be used. The conductive material may be mixed in a ratio of 0.1 wt% to 30 wt% with respect to the total weight of the composition (for example, slurry) for forming the anode active material layer.

In addition, the current collector to which the slurry containing the anode material is applied may be any material used in the technical field of lithium secondary cells, and the type thereof is not limited, but some examples thereof may be copper foil, nickel foil, stainless steel, titanium foil, nickel foam, copper foam, a polymer substrate coated with a conductive metal, or combinations thereof.

Mode for the Invention

(Example)

Hereinafter, the present disclosure will be described in more detail through examples. However, it should be noted that the following examples are only intended to illustrate and concretize the present disclosure, and are not intended to limit the scope of the rights of the present disclosure. This is because the scope of the rights of the present disclosure is determined by the matters described in the patent claims and matters reasonably inferred therefrom.

Manufacturing of Anode Material Precursor and Anode Material

Natural graphite and artificial graphite under the conditions illustrated in Table 1 below were mixed at a speed of 60 rpm for 45 minutes at room temperature using a two-axis rotating blade of the sigma blade type to obtain an anode material precursor. As the artificial graphite, waste graphite, a by-product from packing coke used in the graphitization process of an Acheson furnace, was used, and as the natural graphite, flaky graphite or amorphous graphite was used as described in Table 1. It was confirmed that the specific surface area of the artificial graphite was in the range of approximately 0.8 to 1.5 $m^2$/g. In Table 1, the weight ratio refers to the ratio of the weight of natural graphite to the total weight of artificial graphite and natural graphite.

[Table 1]

| Classification | Natural Graphite | | | | Artificial Graphite | |
|---|---|---|---|---|---|---|
| | Shape | D50 ($\mu$m) | (D90-D10)/D50 | Weight Ratio (%) | D50 ($\mu$m) | Specific Surface Area ($m^2$/g) |
| Invention Example 1 | Flaky | 5.9 | 1.3 | 30 | 18.3 | 0.82 |
| Invention Example 2 | Flaky | 3.4 | 1.5 | 20 | 10.9 | 1.37 |
| Comparative Example 1 | Flaky | 5.6 | 1.6 | 30 | 17.4 | 1.48 |
| Comparative Example 2 | Flaky | 4.6 | 1.1 | 25 | 10.6 | 1.48 |
| Comparative Example 3 | Flaky | 6.2 | 1.3 | 25 | 16.8 | 0.82 |
| Invention Example 3 | amorphous | 2.5 | 0.9 | 15 | 13.3 | 1.42 |
| Invention Example 4 | amorphous | 5.7 | 1.2 | 10 | 18.8 | 1.31 |
| Comparative Example 4 | amorphous | 6.3 | 1.3 | 10 | 16.6 | 1.31 |
| Comparative Example 5 | - | | | 0 | 14 | 1.48 |
| Comparative Example 6 | - | | | 0 | 9 | 1.32 |
| Prior Art Example 1 | Flaky | 11 | 1.2 | 100 | - | - |
| Prior Art Example 2 | Flaky | 14 | 1.2 | 100 | - | - |
| Prior Art Example 3 | Flaky | 20 | 1.5 | 100 | - | - |

The anode material precursor obtained under the conditions described in Table 1 above was mixed with a coal tar-derived pitch (residual carbon content 40% or more) having a softening point of 110°C as a binder at a weight ratio of 15% of the total anode material (precursor + binder), and a shear force was applied by high-speed rotation to coat the particles. After that, the coated particles were carbonized by heat treatment at a temperature of 1200°C for 60 minutes to obtain the anode material.

Manufacturing of Anode

97 wt% of anode material obtained by the above-described process was mixed with 2 wt% of binder including carboxymethyl cellulose and styrene butadiene rubber and 1 wt% of super P conductive agent in a distilled water solvent to prepare an anode active material slurry. The slurry was applied to a copper current collector, dried at 100°C for 10 minutes, and then pressed in a roll press. After that, the anode was manufactured by vacuum drying in a vacuum oven maintained at 100°C for 12 hours. The electrode density of the manufactured anode was in the range of 1.48 to 1.74 g/cc for each example (see Table 3). The results of the adhesion test for the obtained anode are illustrated in Table 2. In Table 2, the electrode adhesion (h) refers to the time at which deintercalation occurred when vacuum drying for 12 hours in a vacuum oven maintained at 100°C. In Table 2, when the electrode adhesion test time was 12 hours (h), it means that deintercalation did not occur until the end of the test. In Table 2, in the case in which deintercalation occurred within 12 hours, an adhesion (gf/$cm^2$) test was performed on some remaining areas. The adhesion test was performed by cutting the final manufactured electrode into 25$cm^2$ sizes according to the ASTM D4541 test method.

[Table 2]

| Classification | Electrode Adhesion(h) | Adhesion(gf/cm$^2$) | Evaluation |
|---|---|---|---|
| Invention Example 1 | 12 | 1039 | Good |
| Invention Example 2 | 12 | 1071 | Good |
| Compara tive Example 1 | 11 | 799 | Bad |
| Compara tive Example 2 | 10 | 761 | Bad |
| Compara tive Example 3 | 11 | 818 | Bad |
| Invention Example 3 | 12 | 1124 | Good |
| Invention Example 4 | 12 | 1179 | Good |
| Compara tive Example 4 | 11 | 668 | Bad |
| Compara tive Example 5 | 3 | 287 | Bad |
| Compara tive Example 6 | 5 | 355 | Bad |
| Prior Art Example 1 | 12 | 892 | Good |
| Prior Art Example 2 | 12 | 1005 | Good |
| Prior Art Example 3 | 12 | 852 | Good |

As can be seen in Table 2 above, in the case of an anode manufactured with an anode material precursor and an anode material that meet the conditions of the present disclosure, the anode material (active material) was strongly attached to the current collector, showing good performance that was equivalent to or better than the case where only natural graphite was used in the related art, whereas in the case where the particle size conditions of natural graphite or artificial graphite were not met, the bonding did not last long enough or the bonding strength was insufficient, exhibiting poor results.

Manufacturing of Half-Cell

In addition to the anode manufactured by the above method, a half cell of 2032 coin cell-type was manufactured using lithium metal as a counter electrode and LiPF6 dissolved in a solvent containing ethylene carbonate and dimethyl carmonate mixed in a volume ratio of 1:1 as an electrolyte.
The initial efficiency (%), capacity (mAh/g) and capacity retention after 50 full cycles of the fabricated half-cells were measured and the results are illustrated in Table 3.

[Table 3]

| Classifica tion | Electrode Density (g/cc) | Initial Efficiency (%) | Capacity (mAh/g) | Capacity Retention (%) |
|---|---|---|---|---|
| Invention Example 1 | 1.61 | 93 | 356 | 92 |
| Invention Example 2 | 1.69 | 94 | 362 | 89 |
| Compara tive Example 1 | 1.48 | 88 | 351 | 74 |
| Compara tive Example 2 | 1.53 | 91 | 350 | 71 |
| Compara tive Example 3 | 1.74 | 94 | 361 | 88 |
| Invention Example 3 | 1.65 | 93 | 362 | 93 |
| Invention Example 4 | 1.58 | 94 | 359 | 91 |
| Prior Art Example 1 | 1.59 | 92 | 357 | 84 |
| Prior Art Example 2 | 1.58 | 91 | 361 | 87 |
| Prior Art Example 3 | 1.62 | 92 | 363 | 84 |

As can be seen in Table 3 above, when an anode was manufactured using an anode material that satisfies the conditions provided by an embodiment of the present disclosure and used in a secondary battery, it not only showed an equivalent level of capacity compared to the prior art example that used natural graphite as an anode, which was mainly used in the related art, but also showed an equivalent or higher capacity retention compared to that of the prior art example.

Therefore, the excellent effect of the present disclosure could be confirmed.

**Claims**

1. A precursor for a graphite anode material, comprising:

   artificial graphite; and
   natural graphite,
   wherein the artificial graphite has a D50 of 11 to 30 μm, and
   the natural graphite has a D50 of 6 μm or less and a span of 1.5 or less expressed by Relation 1 below,

   [Relation 1]

   $$span = (D90-D10)/D50.$$

2. The precursor for a graphite anode material of claim 1, wherein the artificial graphite has a specific surface area of 0.8 to 1.5m$^2$/g.

3. The precursor for a graphite anode material of claim 1, wherein the natural graphite is flaky graphite or amorphous graphite.

4. The precursor for a graphite anode material of claim 1, wherein the natural graphite is included in a ratio of 10 to 30% of a total weight of the artificial graphite and the natural graphite.

5. The precursor for a graphite anode material of claim 1, wherein the artificial graphite is waste graphite, graphite obtained through recycling, or graphite obtained as a byproduct in a graphite manufacturing process.

6. A graphite anode material comprising:

   artificial graphite; and
   a precursor for an anode material including natural graphite, and
   a binder combined with the precursor for the anode material,
   wherein the artificial graphite has a D50 of 11 to 30 μm, and
   the natural graphite has a D50 of 6 μm or less and a span of 1.5 or less expressed by Relation 1 below,

   [Relation 1]

   $$span = (D90-D10)/D50.$$

7. The graphite anode material of claim 6, wherein the artificial graphite has a specific surface area of 0.8 to 1.5m$^2$/g.

8. The graphite anode material of claim 6, wherein the natural graphite is flaky graphite or amorphous graphite.

9. The graphite anode material of claim 6, wherein the natural graphite is included in a ratio of 10 to 30% of a total weight of the artificial graphite and the natural graphite.

10. The graphite anode material of claim 6, wherein the binder is formed by carbonizing one or two or more selected from coal-derived tar, petroleum-derived tar, a pitch composition, and petroleum heavy oil.

11. The graphite anode material of claim 6, wherein the artificial graphite is waste graphite, graphite obtained through recycling, or graphite obtained as a byproduct in a graphite manufacturing process.

12. A lithium secondary battery comprising:

an anode including a current collector and an anode material, the anode material coated on a surface of the current collector and including a precursor for the anode material including artificial graphite and natural graphite and a binder combined with the precursor for the anode material;

an electrolyte; and

a cathode,

wherein the artificial graphite has a D50 of 11 to 30 $\mu$m, and

the natural graphite has a D50 of 6 $\mu$m or less and a span of 1.5 or less expressed by Relation 1 below,

[Relation 1]

$$span = (D90-D10)/D50.$$

13. The lithium secondary battery of claim 12, wherein the artificial graphite is waste graphite, graphite obtained through recycling, or graphite obtained as a byproduct in a graphite manufacturing process.

14. A method for preparing an anode material, comprising:

an operation of preparing artificial graphite and natural graphite;

an operation of mixing the artificial graphite and the natural graphite and obtaining a mixture;

an operation of coating a binder on the mixture; and

an operation of heat-treating the mixture and the binder,

wherein the artificial graphite has a D50 of 11 to 30 $\mu$m, and

the natural graphite has a D50 of 6 $\mu$m or less and a span of 1.5 or less expressed by Relation 1 below,

[Relation 1]

$$span = (D90-D10)/D50.$$

15. The method for preparing an anode material of claim 14, wherein the binder is one or two or more selected from coal-derived tar, petroleum-derived tar, pitch composition, and petroleum heavy oil.

16. The method for preparing an anode material of claim 14, wherein the heat-treating is performed at a temperature of 1000 to 1400°C for 30 to 120 minutes.

17. The method for preparing an anode material of claim 14, wherein the artificial graphite is waste graphite, graphite obtained in a recycling process, or graphite obtained as a byproduct in a graphite manufacturing process.

[FIG. 1]

Increase in side reaction sites
(edge surface) and decrease
in electrode processability

Coating layer formation –> side reaction
site reduction and natural graphite fine
powder –> improvement in electrode
processability (adhesion)

Enhancement of adhesion using
natural graphite fine powder

Cu COPPER CURRENT COLLECTOR

## INTERNATIONAL SEARCH REPORT

| International application No. |
|---|
| **PCT/KR2023/020281** |

### A. CLASSIFICATION OF SUBJECT MATTER

**H01M 4/133**(2010.01)i; **H01M 4/62**(2006.01)i; **H01M 4/1393**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); C01B 31/04(2006.01); C01B 32/21(2017.01); H01M 10/052(2010.01); H01M 10/0525(2010.01); H01M 4/02(2006.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 인조흑연(artificial graphite), 천연흑연(natural graphite), 입경 (diameter), 바인더(binder), 열처리(heating)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0074552 A (LG CHEM, LTD.) 25 June 2020 (2020-06-25)<br>See claims 1-2 and 9-10; and paragraphs [0042], [0057], [0064], [0075], [0097] and [0104]. | 1-17 |
| Y | KR 10-2020-0139817 A (BTR NEW MATERIAL GROUP CO., LTD.) 14 December 2020 (2020-12-14)<br>See claims 1 and 11; and paragraph [0017]. | 1-17 |
| Y | KR 10-1577889 B1 (LG CHEM, LTD.) 16 December 2015 (2015-12-16)<br>See claims 1-2; and paragraph [0029]. | 2-3,7-8 |
| Y | JP 11-011918 A (HITACHI CHEM CO., LTD.) 19 January 1999 (1999-01-19)<br>See claims 1 and 7; and paragraphs [0013] and [0021]. | 14-17 |
| A | KR 10-2017-0007140 A (LG CHEM, LTD.) 18 January 2017 (2017-01-18)<br>See entire document. | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **13 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020281**

| Patent document cited in search report | | | Publication date (day/month/year) | Patent family member(s) | | | Publication date (day/month/year) |
|---|---|---|---|---|---|---|---|
| KR | 10-2020-0074552 | A | 25 June 2020 | CN | 111971824 | A | 20 November 2020 |
| | | | | EP | 3770999 | A1 | 27 January 2021 |
| | | | | JP | 2021-518042 | A | 29 July 2021 |
| | | | | JP | 7105910 | B2 | 25 July 2022 |
| | | | | KR | 10-2347003 | B1 | 05 January 2022 |
| | | | | US | 11862799 | B2 | 02 January 2024 |
| | | | | US | 2021-0265630 | A1 | 26 August 2021 |
| | | | | WO | 2020-130465 | A1 | 25 June 2020 |
| KR | 10-2020-0139817 | A | 14 December 2020 | CN | 111244450 | A | 05 June 2020 |
| | | | | EP | 3780181 | A1 | 17 February 2021 |
| | | | | JP | 2021-527613 | A | 14 October 2021 |
| | | | | JP | 7119131 | B2 | 16 August 2022 |
| | | | | US | 2021-0017028 | A1 | 21 January 2021 |
| | | | | WO | 2020-107927 | A1 | 04 June 2020 |
| KR | 10-1577889 | B1 | 16 December 2015 | KR | 10-2014-0095999 | A | 04 August 2014 |
| JP | 11-011918 | A | 19 January 1999 | None | | | |
| KR | 10-2017-0007140 | A | 18 January 2017 | KR | 10-2124948 | B1 | 22 June 2020 |

Form PCT/ISA/210 (patent family annex) (July 2022)